(19) Europäisches Patentamt European Patent Office Office européen des brevets

(11) **EP 4 738 249 A1**

(12) **EUROPEAN PATENT APPLICATION**
published in accordance with Art. 153(4) EPC

(43) Date of publication:
**06.05.2026 Bulletin 2026/19**

(21) Application number: **24831986.5**

(22) Date of filing: **26.06.2024**

(51) International Patent Classification (IPC):
**G06T 7/11** (2017.01)    **B25J 13/08** (2006.01)

(52) Cooperative Patent Classification (CPC):
**B25J 13/08; G06T 7/11**

(86) International application number:
**PCT/JP2024/023154**

(87) International publication number:
**WO 2025/005127 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023108254**

(71) Applicant: **Kyocera Corporation**
**Kyoto-shi, Kyoto 612-8501 (JP)**

(72) Inventor: **SASABE Akihiro**
**Kyoto-shi, Kyoto 612-8501 (JP)**

(74) Representative: **TBK**
**Bavariaring 4-6**
**80336 München (DE)**

(54) **PROCESSING DEVICE, ROBOT CONTROL DEVICE, ROBOT SYSTEM, AND PROGRAM**

(57)    A processing device includes a detector. The detector detects a partial surface included in a surface of an object based on surface information and color information. The surface information is surface information about the surface of the object. The surface information is obtained based on distance information indicating a distance to the object. The color information is color information of a color image or a grayscale image including the object and an area adjacent to the object.

FIG. 1

**Description**

TECHNICAL FIELD

The present disclosure relates to estimating a surface of an object.

BACKGROUND OF INVENTION

Patent Literature 1 describes a technique for detecting a plane.

CITATION LIST

PATENT LITERATURE

Patent Literature 1: Japanese Unexamined Patent Application Publication No. 2014-85940

SUMMARY

One or more aspects of the present disclosure are directed to a processing device, a robot control device, a robotic system, and a program. In one embodiment, a processing device includes a detector. The detector detects a partial surface included in a surface of an object based on surface information and color information. The surface information is surface information about the surface of the object. The surface information is obtained based on distance information indicating a distance to the object. The color information is color information of a color image or a grayscale image including the object and an area adjacent to the object.

In one embodiment, a robot control device includes a controller that controls a robot based on a detection result of the partial surface obtained by the detector included in the above processing device.

In one embodiment, a robotic system includes the above robot control device and a robot. The robot is controllable by the controller included in the robot control device.

In one embodiment, a program is a program for causing a computer to function as the above processing device.

In one embodiment, a program is a program for causing a computer to function as the above robot control device.

BRIEF DESCRIPTION OF THE DRAWINGS

FIG. 1 is a block diagram of a processing device in an example.

FIG. 2 is a block diagram of a processing system in an example.

FIG. 3 is a schematic diagram of an example captured image.

FIG. 4 is a schematic diagram of an example depth image.

FIG. 5 is a flowchart of an example operation performed by the processing device.

FIG. 6 is a schematic diagram of an example object mask image.

FIG. 7 is a schematic diagram of an example target surface mask image.

FIG. 8 is a flowchart of an example operation performed by a corrector.

FIG. 9 is a schematic diagram of a captured image divided into multiple segments in an example.

FIG. 10 is a schematic diagram illustrating an example operation performed by the corrector.

FIG. 11 is a schematic diagram illustrating an example operation performed by the corrector.

FIG. 12 is a schematic diagram of an example target surface mask image including a reshaped target surface region.

FIG. 13 is a schematic diagram of a robotic system in an example.

FIG. 14 is a block diagram of a robot control device in an example.

FIG. 15 is a block diagram of a processing device in an example.

FIG. 16 is a schematic diagram of an example distance conversion image.

FIG. 17 is a schematic diagram illustrating an example suction position to be sucked by a suction portion.

FIG. 18 is a schematic diagram illustrating an example suction position to be sucked by the suction portion.

FIG. 19 is a block diagram of a robot control device in an example.

FIG. 20 is a block diagram of a processing device in an example.

FIG. 21 is a schematic diagram of an example captured image.

FIG. 22 is a schematic diagram of an example target surface mask image.

FIG. 23 is a schematic diagram of an example target surface mask image.

FIG. 24 is a schematic diagram illustrating an example operation performed by an estimator.

FIG. 25 is a schematic diagram illustrating an example operation performed by the estimator.

FIG. 26 is a schematic diagram illustrating an example operation performed by the estimator.

FIG. 27 is a schematic diagram of an example target surface mask image.

FIG. 28 is a schematic diagram illustrating an example operation performed by the estimator.

DESCRIPTION OF EMBODIMENTS

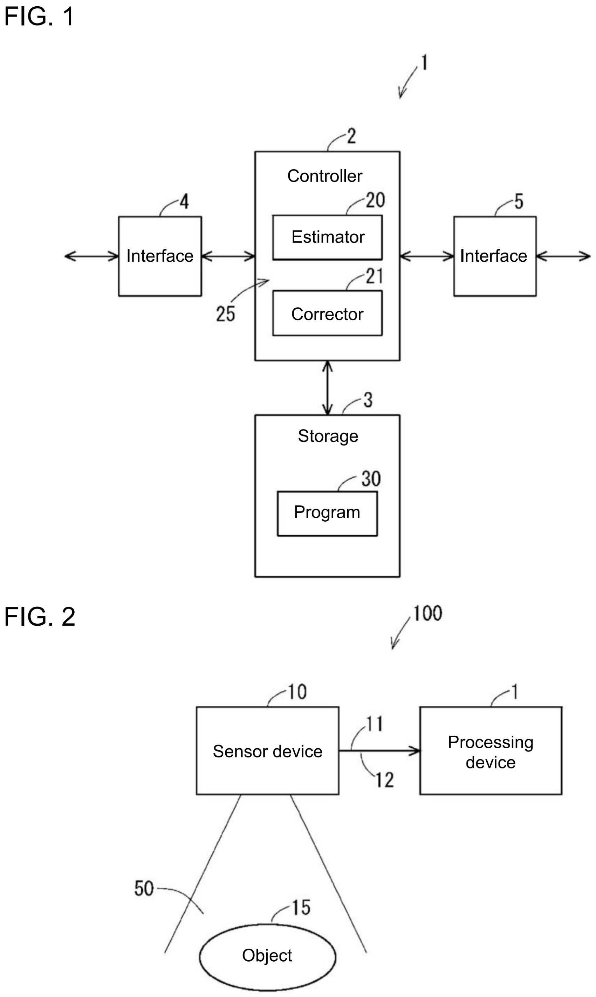

FIG. 1 is a block diagram of a processing device 1 in an example. FIG. 2 is a block diagram of a processing system 100 including the processing device 1 in an example.
As illustrated in FIG. 2, the processing system 100 includes, for example, the processing device 1 and a sensor device 10. The sensor device 10 is, for example, a three-dimensional (3D) camera. The sensor device 10 can capture an image of, for example, a measurement space 50 in which an object 15 is located.
The sensor device 10 can generate, for example, a depth image 11 representing the distance in the measurement space 50 and a captured image 12 including the object 15. The captured image 12 is, for example, a color image. The depth image 11 is generated by, for example, a stereo camera included in the sensor device 10. The captured image 12 is generated by, for example, a color camera included in the sensor device 10. The captured image 12 as a color image may be hereafter referred to as a color image 12.
The depth image 11 is also referred to as a range image. The depth image 11 is, for example, a grayscale image. The multiple pixels included in the depth image 11 correspond to the respective multiple measurement points included in the measurement space 50. The depth image 11 represents the distance from the sensor device 10 to each measurement point. Each pixel in the depth image 11 has a pixel value indicating the distance from the sensor device 10 to the measurement point corresponding to the pixel. The pixel value of the depth image 11 may be distance information. The multiple measurement points corresponding to the respective multiple pixels in the depth image 11 include multiple measurement points on a surface of the object 15 in the measurement space 50. The depth image 11 represents the distance to the object 15. More specifically, the depth image 11 represents the distance to the surface of the object 15. The depth image 11 represents the distance to each measurement point on the surface of the object 15. In other words, the depth image 11 represents distance information indicating the distance to the object 15. In the depth image 11, for example, a pixel corresponding to a measurement point at a greater distance has a greater pixel value. A distance indicated by the pixel value of a pixel in the depth image 11 may be hereafter referred to as a measurement distance. A pixel corresponding to a measurement distance refers to a pixel with the pixel value indicating the measurement distance. A measurement distance corresponding to a pixel refers to a measurement distance indicated by the pixel value of the pixel.

In this example, the depth image 11 is generated with a stereo method. However, any method other than a stereo method may be used. For example, the depth image 11 may be generated with a projector method, a combination of a stereo method and a projector method, or a time-of-flight (ToF) method.

The multiple pixels included in the color image 12 correspond to the respective multiple measurement points included in the measurement space 50. The numbers of pixels in the row direction and the column direction in the color image 12 are, for example, respectively the same as the numbers of pixels in the row direction and the column direction in the depth image 11. A pixel in the color image 12 and a pixel in the depth image 11 that are at the same pixel position correspond to the same measurement point in the measurement space 50. The color image 12 has pixel values including, for example, a red component (R component), a green component (G component), and a blue component (B component). Each of the pixel values of the color image 12 may be color information of the pixel. The color image 12 is also referred to as, for example, an RGB image. The color image 12 represents the color of the object 15. More specifically, the color image 12 represents the color of each measurement point on the surface of the object 15. A pixel in the color image 12 with a pixel value indicating a color of a measurement point is at the same position as a pixel in the depth image 11 with a pixel value indicating the distance to the measurement point.

Note that the captured image 12 may be a grayscale image including the object 15. The captured image 12 being a grayscale image may be referred to as a grayscale image 12. In the embodiment mainly described below, the captured image 12 is a color image. However, the grayscale image 12 may also be used in place of the color image 12 in the embodiment below.

The processing device 1 estimates a target surface of the object 15 based on the depth image 11. The processing device 1 then corrects the estimation result of the target surface of the object 15 based on the captured image 12 (e.g., the color image 12 or the grayscale image 12) including the object 15. The processing device 1 obtains, for example, depth image data indicating the depth image 11 and color image data indicating the color image 12 from the sensor device 10. The depth image data includes the pixel value (in other words, distance information) of each pixel included in the depth image 11. The color image data includes the pixel value of each pixel (in other words, color information of each pixel) included in the color image 12. In other words, the processing device 1 estimates the target surface of the object 15 based on the depth image data, and corrects the estimation result based on the color image data.

Example Structure of Processing Device

As illustrated in FIG. 1, the processing device 1 includes, for example, a controller 2, a storage 3, an interface 4, and an interface 5. The processing device 1 may be, for example, a processing circuit. The processing device 1 may be, for example, a computer.

The interface 4 can communicate with the sensor device 10. The interface 4 may communicate with the sensor device 10 with wires or wirelessly. The interface 4 may be, for example, an interface circuit, a communicator, or a communication circuit. The interface 4 obtains the depth image 11 and the color image 12 generated by the sensor device 10. The interface 4 obtains the depth image 11 and the color image 12 generated by the sensor device 10 by obtaining the depth image data and the color image data from the sensor device 10. The depth image 11 and the color image 12 obtained through the interface 4 are input into the controller 2. In other words, the depth image data and the color image data received by the interface 4 are input into the controller 2.

The interface 5 can communicate with a device external to the processing device 1 (also referred to as an external device), other than the sensor device 10. The interface 5 may communicate with the external device with wires or wirelessly. The interface 5 may be, for example, an interface circuit, a communicator, or a communication circuit. The interface 5 receives, from the external device, a signal including data that is then input into the controller 2.

The controller 2 can control other components of the processing device 1 to centrally manage an operation of the processing device 1. The controller 2 may be, for example, a control circuit. The controller 2 includes at least one processor to provide control and processing capabilities for implementing various functions, as described in more detail below.

In various embodiments, at least one processor may be a single integrated circuit (IC), or multiple ICs, multiple discrete circuits, or both these circuits connected to one another for mutual communication. At least one processor may be implemented using various known techniques.

In one embodiment, for example, the processor includes one or more circuits or units configured to implement instructions stored in an associated memory to perform one or more data computation procedures or processes. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations. The processor may implement the functions described below.

The controller 2 may include, for example, a central processing unit (CPU) as the processor. The storage 3 may include a non-transitory recording medium readable by the CPU in the controller 2, such as a read-only memory (ROM) and a random-access memory (RAM). The storage 3 stores, for example, a program 30 for controlling the processing device 1. Various functions of the controller 2 are implemented by, for example, the CPU in the controller 2 executing the program 30 in the storage 3.

The structure of the controller 2 is not limited to the above example. For example, the controller 2 may include multiple CPUs. The controller 2 may also include at least one digital signal processor (DSP). The functions of the controller 2 may be implemented entirely or partially by a hardware circuit, without using software to implement the functions. The storage 3 may include a non-transitory computer-readable recording medium other than the ROM and the RAM. The storage 3 may include, for example, a small hard disk drive and a solid-state drive (SSD).

The controller 2 includes, for example, a detector 25 as a functional block. The detector 25 is implemented by the CPU in the controller 2 executing the program 30 in the storage 3. The detector 25 detects, as the target surface, a partial surface included in the surface of the object 15 based on surface information and color information. The surface information is surface information about the surface of the object 15. The surface information is obtained based on distance information indicating a distance to the object 15 represented by the depth image 11. The color information is color information of the captured image 12 (e.g., the color image 12 or the grayscale image 12). This allows proper detection of the target surface, or in other words, the partial surface included in the surface of the object 15. In an embodiment of the present disclosure, the color information may include information of shading between white and black represented by the grayscale image.

The detector 25 includes, for example, an estimator 20 and a corrector 21. The estimator 20 obtains the surface information about the surface of the object 15 based on the distance information represented by the depth image 11, and estimates a target surface (in other words, a partial surface) based on the obtained surface information. The corrector 21 corrects, based on the color information of the captured image 12 (e.g., the color image 12 or the grayscale image 12), the estimation result obtained by the estimator 20, and determines the corrected estimation result to be a detection result of the target surface. Surface information hereafter refers to surface information about the surface of the object 15.

The target surface (in other words, the partial surface) of the object 15 estimated by the estimator 20 is, for example, a plane included in a portion of the surface of the object 15 that can be imaged by the sensor device 10. In other words, the target surface of the object 15 is a plane included in a portion of the surface of the object 15 viewable from the sensor device 10. In still other words, the target surface of the object 15 is a plane included in a portion of the surface of the object 15 included in the color image 12. A portion of the surface of the object 15 that can be imaged by the sensor device 10 may be hereafter referred to as an object measurement surface. A target surface hereafter refers to a target surface of the object 15 to be estimated.

Note that the functions of the detector 25 may be implemented entirely or partially by a hardware circuit, without using software to implement the functions. This also applies to the estimator 20 and the corrector 21.

Examples of Depth Image and Color Image

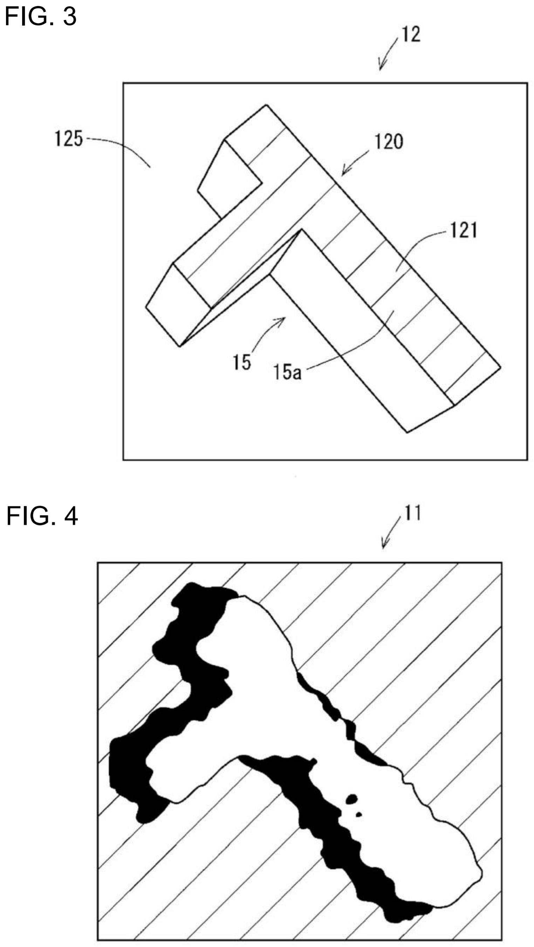

FIG. 3 is a schematic diagram of an example of the color image 12 (in other words, the captured image 12). In FIG. 3, the color image 12 is roughly represented with lines for ease of illustration. The color image 12 includes the object 15 including a target surface 15a. The color image 12 also includes a background of the object 15. The color image 12 includes the object 15 and an area adjacent to the object 15. The color image 12 includes the target surface 15a and an area adjacent to the target surface 15a. The color image 12 includes an object region 120 that is an image of the object 15. In other words, the object region 120 is an image including the object 15 alone. The object region 120 may also be referred to as an object image.

In this example, the object 15 is, for example, a substantially T-shaped metal component. The object 15 is, for example, placed on a tray. The color image 12 also includes a tray region 125 (also referred to as a background region 125) that is an image of the tray as a background. In the color image 12, the region other than the object region 120 is the tray region 125. The tray region 125 may also be referred to as a tray image or a background image. Note that the actual color image 12 may include a shadow of the object 15. The actual color image 12 may include a shadow of the tray.

The object region 120 includes a target surface region 121 that is an image of the target surface 15a. The target surface region 121 may also be referred to as a target surface image. In FIG. 3, the target surface region 121 is hatched. In this example, the target surface 15a is, for example, a plane in the object measurement surface having the largest size as viewed from the sensor device 10. In other words, the target surface 15a is a plane in the object measurement surface included in the captured image 12 having the largest image size.

The color information of the color image 12 indicates multiple levels of color, such as 256 levels. The color information of the color image 12 includes a color tone difference. More specifically, the color image 12 represents the shading, tone, or other parameters of color depending on, for example, the imaging environment of the color image 12. The color information of the color image 12 includes a distribution of colors. In the same or a similar manner, the color information of the grayscale image 12 indicates multiple levels of gray, such as 256 levels. The color information of the grayscale image 12 includes a color tone difference. The color information of the grayscale image 12 includes a distribution of colors.

The color information of the captured image 12 (e.g., the color image 12 or the grayscale image 12) includes a color tone difference and a distribution of colors of the object 15. The color information of the captured image 12 includes color information (also referred to as first color information) of the target surface 15a and color information (also referred to as second color information) of the area adjacent to the target surface 15a. The first color information includes a color tone difference and a distribution of colors of the target surface 15a.

The corrector 21 may correct the estimation result of the target surface 15a obtained by the estimator 20 based on the first color information and the second color information of the captured image 12 (e.g., the color image 12 or the grayscale image 12). The corrector 21 may correct the estimation result of the target surface 15a based on the color tone difference or the distribution of colors of the object 15 represented by the captured image 12. The corrector 21 may correct the estimation result of the target surface 15a based on the color tone difference or the distribution of colors of the target surface 15a represented by the captured image 12.

FIG. 4 is a schematic diagram of an example of the depth image 11. In FIG. 4, the depth image 11 includes a white portion, a hatched portion, and a black portion for ease of illustration, although the actual depth image 11 is a grayscale image.

Each pixel in the white portion in the depth image 11 corresponds to a measurement point relatively close to the sensor device 10. Each pixel in the white portion in the depth image 11 has a relatively low pixel value. The white portion in the depth image 11 substantially corresponds to the target surface 15a of the object 15.

Each pixel in the hatched portion in the depth image 11 corresponds to a measurement point relatively far from the sensor device 10. Each pixel in the hatched portion in the depth image 11 has a relatively high pixel value. The hatched portion in the depth image 11 substantially corresponds to the tray (in other words, the background) on which the object 15 is placed.

Each pixel in the black portion in the depth image 11 corresponds to a measurement point at which the sensor device 10 cannot measure the distance due to, for example, shadows of the object 15 and the tray. Each pixel in the black portion in the depth image 11 has a pixel value being zero.

Operation Example of Controller

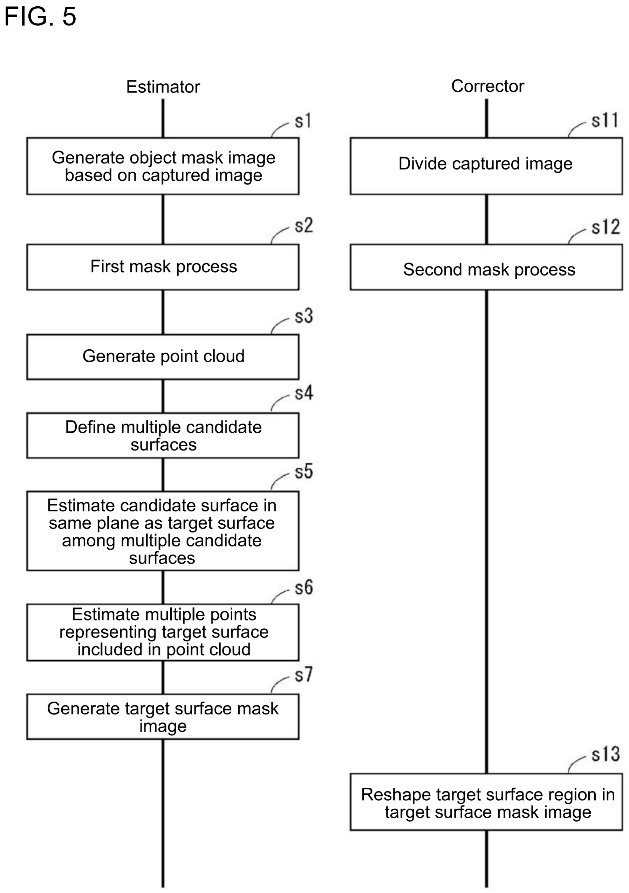

FIG. 5 is a flowchart of an example operation performed by the estimator 20 and the corrector 21. As shown in FIG. 5, in step s1, the estimator 20 generates a mask image 200 of the object 15 (in other words, an object mask image 200) based on the color image 12 (in other words, the captured image 12). The object mask image 200 indicates the position of the object 15 in the measurement space 50 and the shape of the object 15. In other words, the object mask image 200 indicates the position and the shape of the object 15 as viewed from the sensor device 10. The object mask image 200 is, for example, a binary image.

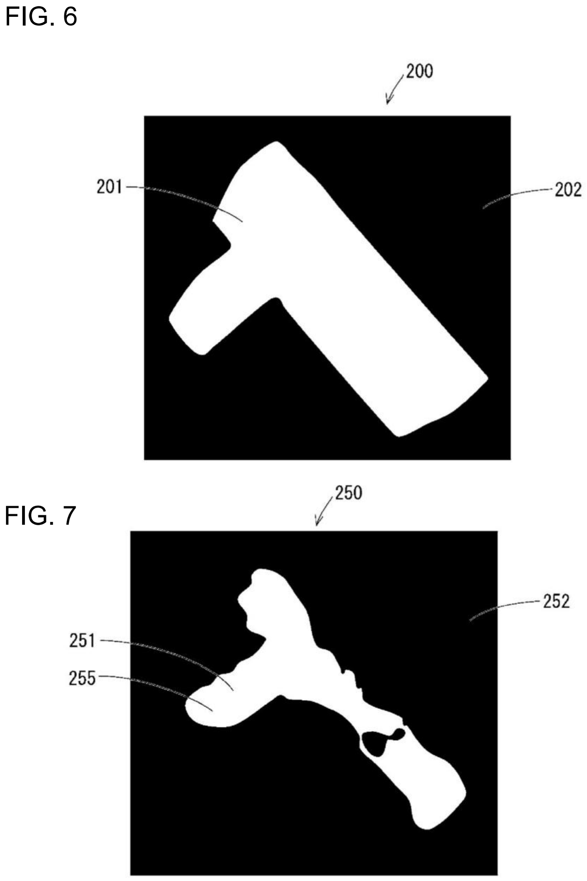

FIG. 6 is a schematic diagram of an example of the object mask image 200. The object mask image 200 includes an object region 201 representing the object 15, and a region 202 other than the object region 201 (also referred to as another region 202). Each pixel in the object region 201 has a pixel value of, for example, "1." Each pixel in the other region 202 has a pixel value of, for example, "0."

The numbers of pixels in the row direction and the column direction in the object mask image 200 are, for example, respectively the same as the numbers of pixels in the row direction and the column direction in the color image 12. The numbers of pixels in the row direction and the column direction in the object mask image 200 are, for example, respectively the same as the numbers of pixels in the row direction and the column direction in the depth image 11.

The multiple pixels included in the object mask image 200 correspond to the respective multiple measurement points in the measurement space 50. A pixel in the object mask image 200 and a pixel in the color image 12 that are at the same pixel position correspond to the same measurement point in the measurement space 50. A pixel in the object mask image 200 and a pixel in the depth image 11 that are at the same pixel position correspond to the same measurement point in the measurement space 50.

The multiple pixels included in the object region 201 correspond to the respective multiple measurement points on the object measurement surface. The position of the object region 201 in the object mask image 200 indicates the position of the object 15 in the measurement space 50. The shape of the object region 201 indicates the shape of the object 15. The position and the shape of the object region 201 in the object mask image 200 are the same as or similar to the position and the shape of the object region 120 in the color image 12. In the object mask image 200, each pixel in a portion representing the object 15 (specifically, the object region 201) has a pixel value of "1," and each pixel in a portion representing the region other than the object 15 (the other region 202) has a pixel value of "0."

In the depth image 11, a region corresponding to the object 15 (in other words, a partial image corresponding to the object 15) is referred to as an object-corresponding region. The object-corresponding region represents the distance to the object 15. The object-corresponding region may also be referred as an object range image representing the distance to the object. The multiple pixels included in the object-corresponding region correspond to the respective multiple measurement points on the object measurement surface. The object-corresponding region represents the distance to each measurement point on the object measurement surface. The position and the shape of the object region 201 in the object mask image 200 are the same as or similar to the position and the shape of the object-corresponding region in the depth image 11.

The estimator 20 can generate the object mask image 200 through, for example, machine learning using the color image 12 as input data. The estimator 20 includes, for example, a neural network for performing instance segmentation, and uses the neural network to generate the object mask image 200. Examples of the neural network for performing instance segmentation include Mask Scoring R-CNN. R-CNN is an abbreviation of regionbased convolutional neural networks.

The estimator 20 inputs the color image 12 into an input layer of the neural network that has been trained. The trained neural network recognizes the object 15 in the color image 12, and outputs the object mask image 200 representing the object 15 from an output layer. The trained neural network has been trained to generate and output the object mask image 200 based on the color image 12.

After the object mask image 200 is generated in step s1, step s2 is performed. In step s2, the estimator 20 performs a first mask process of extracting the object-corresponding region from the depth image 11 using the object mask image 200. In the first mask process, the estimator 20 identifies multiple pixels in the depth image 11 that are at the same pixel positions as the respective multiple pixels included in the object region 201 in the object mask image 200. More specifically, the estimator 20 identifies multiple pixels in the depth image 11 that are at the same pixel positions as the respective multiple pixels having a pixel value of "1" in the object mask image 200. The estimator 20 then extracts, as the object-corresponding region from the depth image 11, a region including the multiple pixels identified in the depth image 11.

In step s3, the estimator 20 generates a point cloud representing the surface of the object 15 as surface information based on the extracted object-corresponding region. The point cloud representing the surface of the object 15 (also referred to as an object point cloud) includes, for example, multiple measurement points corresponding to the respective multiple pixels included in the object-corresponding region. The object point cloud is represented by 3D position coordinates of the multiple measurement points included in the object point cloud in the measurement space 50. The 3D position coordinates of the measurement points are, for example, position coordinates in a 3D orthogonal coordinate system defined for the 3D camera as the sensor device 10 (also referred to as a camera coordinate system). The estimator 20 generates point cloud data including the 3D position coordinates of the multiple measurement points included in the object point cloud based on, for example, the performance of the 3D camera as the sensor device 10.

The estimator 20 thus generates, based on the depth image 11, the object point cloud that is the point cloud representing the surface of the object 15. Each of the multiple measurement points included in the object point cloud may be hereafter referred to as an object point.

In step s4 after step s3, the estimator 20 defines multiple candidate surfaces in the camera coordinate system based on the generated object point cloud. The candidate surfaces are candidates for a surface (also referred to as a specific surface) in the same plane as the target surface. In other words, the specific surface is, for example, a surface including the target surface. The candidate surface is, for example, a plane. In step s5 after step s4, the estimator 20 estimates, of the multiple candidate surfaces, the specific surface that is a candidate surface in the same plane as the target surface based on the result of comparison between a threshold and the distance from each of the candidate surfaces to an object point. The processing in steps s3 and s4 is performed using, for example, random sample consensus (RANSAC) as a plane estimation algorithm.

In step s4, the estimator 20 randomly selects three object points from the multiple object points included in the object point cloud. The estimator 20 then defines, as a candidate surface, one plane passing through the three selected object points. The estimator 20 repeats this process to define multiple candidate surfaces in the camera coordinate system.

After defining a candidate surface in step s4, the estimator 20 calculates the number of object points located near the defined candidate surface (also referred to as nearby object points), or specifically, the number of object points located at a distance less than or equal to the threshold from the defined candidate surface. The distance from the candidate surface to an object point refers to the length of a perpendicular line drawn from the object point to the candidate surface. The threshold used for comparison with the distance from the candidate surface to an object point is hereafter referred to as a specific-surface estimation threshold.

In step s4, the estimator 20 calculates the number of nearby object points for each of the multiple candidate surfaces. In step s5, the estimator 20 identifies the candidate surface with the largest number of nearby object points among the multiple candidate surfaces. The candidate surface with the largest number of nearby object points is likely to be in the same plane as the plane in the object measurement surface having the largest size as viewed from the sensor device 10 (in other words, the target surface 15a). The estimator 20 thus estimates the candidate surface with the largest number of nearby object points to be the specific surface that is in the same plane as the target surface 15a.

Note that the estimator 20 may randomly select four or more object points from the multiple object points included in the object point cloud in step s4. In this case, the estimator 20 may use the least squares method to identify the plane having the minimum sum of the distances from the selected four or more object points, and may define the identified plane as a candidate surface. The number of object points located at a distance less than the threshold from the candidate surface may be used as the number of nearby object points.

After the specific surface is estimated in step s5, step s6 is performed. In step s6, the estimator 20 estimates multiple object points representing the target surface 15a included in the object point cloud based on the result of comparison between the threshold and the distance from the estimated specific surface to an object point. The estimator 20 estimates multiple object points located at a distance less than or equal to the threshold from the specific surface to be multiple object points representing the target surface 15a. Each of the multiple object points representing the target surface 15a may be hereafter referred to as a target surface point. The threshold used in step s6, or specifically, the threshold used to estimate the target surface point, may be hereafter referred to as a target-surface-point estimation threshold. Multiple target surface points representing the target surface 15a are, in other words, multiple measurement points on the target surface 15a. The target-surface-point estimation threshold may be the same as or different from the specific-surface estimation threshold.

Note that the specific surface may be estimated using a plane estimation algorithm other than RANSAC, although RANSAC is used to estimate the specific surface in this example. For example, the specific surface may be estimated using randomized Hough transform (RHT) or region growing segmentation. Multiple object points located at a distance less than the threshold from the specific surface may be estimated to be multiple target surface points representing the target surface 15a.

In step s7 after step s6, the estimator 20 generates a mask image of the target surface 15a (also referred to as a target surface mask image) based on the estimated multiple target surface points and the depth image 11. The target surface mask image indicates the position and the shape of the target surface 15a in the measurement space 50. In other words, the target surface mask image indicates the position and the shape of the target surface 15a as viewed from the sensor device 10. The target surface mask image is, for example, a binary image. The estimator 20 generates the target surface mask image as, for example, the estimation result of the target surface 15a (also referred to as a target-surface estimation result).

In step s7, the estimator 20 identifies, among the multiple pixels included in the depth image 11, multiple pixels corresponding to the estimated multiple target surface points (in other words, multiple measurement points). A region including the identified multiple pixels corresponds to the target surface 15a. The pixel values of the identified multiple pixels indicate the respective distances to the multiple measurement points on the target surface 15a. In the depth image 11, the estimator 20 resets the pixel values of the identified multiple pixels to "1" and resets the pixel values of the other pixels to "0," thus generating the target surface mask image.

FIG. 7 is a schematic diagram of an example of a target surface mask image 250. The target surface mask image 250 includes a first region 251 (a white region in FIG. 7) having a pixel value of "1," and a second region 252 (a black region in FIG. 7) having a pixel value of "0." The multiple pixels included in the first region 251 correspond to the respective multiple target surface points estimated in step s6. The first region 251 is a target surface region 255 representing the target surface 15a. The position of the target surface region 255 in the target surface mask image 250 indicates the position of the target surface 15a in the measurement space 50. The shape of the target surface region 255 indicates the shape of the target surface 15a.

When the estimator 20 estimates the target surface 15a of the object 15 based on the depth image 11 as described above, the target-surface estimation result obtained by the estimator 20 may include an error caused by an error in the distance to each measurement point measured by the sensor device 10. This may cause the target surface region 255 included in the target surface mask image 250 generated based on the depth image 11 to have a shape different from the actual shape of the target surface 15a of the object 15 (a hatched portion in FIG. 3) as illustrated in FIG. 7.

In this example, the corrector 21 corrects the target-surface estimation result obtained by the estimator 20 based on the captured image 12. This reduces errors in the target-surface estimation result obtained by the estimator 20, and allows the target surface region 255 included in the target surface mask image 250 to have a shape closer to the actual shape of the target surface 15a. An operation example of the corrector 21 will now be described.

In step s11 in FIG. 5, the corrector 21 performs a division process of dividing the color image 12 (in other words, the captured image 12) into multiple segments having boundaries aligned with edges. In the division process, the corrector 21 divides the color image 12 into k segments (k is an integer greater than or equal to 2) using, for example, simple linear iterative clustering (SLIC). The segments are referred to as, for example, clusters or superpixels. Step s11 will now be described in detail. Note that the edges include intersections of multiple surfaces of the object and boundaries between the object and the background.

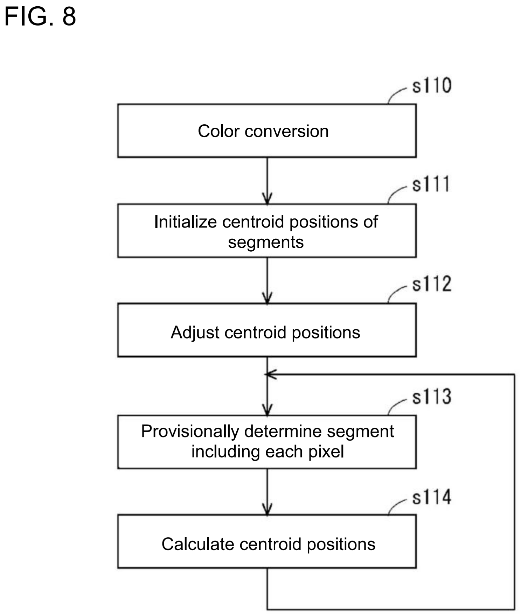

FIG. 8 is a flowchart of an example of step s11 in detail. In this example, an orthogonal xy-coordinate system is defined as an image coordinate system for an image such as the color image 12 or the depth image 11. The pixel position of each pixel in the image is represented by a two-dimensional position in the image coordinate system. More specifically, the pixel position of each pixel in the image is represented by an x-coordinate and a y-coordinate in the image coordinate system. For example, the image coordinate system has an x-direction defined as the row direction of the image (in other words, a lateral direction) and a y-direction defined as the column direction of the image (in other words, a vertical direction).

As shown in FIG. 8, in step s11, step s110 is performed first. In step s110, the corrector 21 performs color conversion to convert the R component, the G component, and the B component of the pixel value of each pixel in the color image 12 to a lightness L, a chromaticity a, and a chromaticity b. The color image 12 resulting from the conversion of the R component, the G component, and the B component of each pixel to the lightness L, the chromaticity a, and the chromaticity b may be hereafter specifically referred to as a converted color image 12 or a Lab image 12. The original color image 12, or specifically the color image 12 before the color conversion, may be referred to as an RGB image 12.

In step s111 after step s110, the corrector 21 initializes the centroid positions of the k segments for the converted color image 12 in the image coordinate system. The corrector 21 sets, for example, the k centroid positions at equal intervals in a matrix. The value of k may be, for example, 80 or greater, 90 or greater, or 100 or greater. A centroid position to be described is hereafter referred to as a focused centroid position.

In step s112, the corrector 21 adjusts the initialized k centroid positions based on a color gradient. To adjust the focused centroid position, the corrector 21 uses adjustment pixels that are $3 \times 3$ pixels (nine pixels) including a pixel at the focused centroid position and its eight neighboring pixels. The corrector 21 then calculates a color gradient (in other words, the gradient of Lab) individually for each of the nine adjustment pixels. The corrector 21 shifts the focused centroid position to the pixel position of the adjustment pixel with the lowest calculated color gradient among the nine adjustment pixels. In other words, the corrector 21 selects, from the nine adjustment pixels for the focused centroid position, the adjustment pixel with the smallest color change from the neighboring pixels, and defines the position of the selected pixel as the adjusted focused centroid position. In this manner, the corrector 21 individually adjusts each of the k centroid positions in the image coordinate system.

Step s113 is performed after step s112. In step s113, the corrector 21 places the multiple pixels included in the converted color image 12 in a five-dimensional (5D) space defined by axes of the lightness L, the chromaticity a, the chromaticity b, the x-coordinate, and the y-coordinate (also referred to as a 5D coordinate system). The corrector 21 determines the positions of the k pixels in the 5D space corresponding to the k adjusted centroid positions in the image coordinate system, and defines the positions as the centroid positions of the k segments in the 5D space. A pixel to be described among the multiple pixels placed in the 5D space is hereafter referred to as a focused pixel.

The corrector 21 then provisionally determines, as a segment including the focused pixel, a segment having the centroid position closest to the focused pixel among the k centroid positions in the 5D space. In the same or a similar manner, the corrector 21 provisionally determines a segment including each pixel in the 5D space. This allows the provisional determination of the borders of the k segments in the 5D space.

In step s114, the corrector 21 recalculates the centroid positions of the k segments in the 5D space. For example, the corrector 21 calculates the average value of the positions of the multiple pixels included in each segment in the 5D space, and defines the calculated value as a renewed centroid position of the segment.

The corrector 21 then performs step s113 again to provisionally redetermine, as a segment including the focused pixel, a segment having the centroid position closest to the focused pixel among the recalculated k centroid positions. A change in pixels included in a segment causes a change in the shape of the segment. In the same or a similar manner, the corrector 21 provisionally redetermines a segment including each pixel in the 5D space. In step s114, the corrector 21 recalculates the centroid positions of the k segments in the 5D space. The estimator 20 then repeats steps s113 and s114.

The corrector 21 may end the process shown in FIG. 8 when, for example, the k segments include at least one segment for which the centroid position calculated in step s114 has no substantial change from the centroid position calculated in step s114 in the preceding cycle. The corrector 21 may end the process shown in FIG. 8 when, for example, step s114 is performed a predetermined number of times.

The borders of the segments at the end of the process shown in FIG. 8 are the final borders of the segments. More specifically, the segment is finally determined for each of the multiple pixels included in the converted color image 12 when the process shown in FIG. 8 ends. In other words, the pixels included in each of the k segments in the converted color image 12 are finally determined. The converted color image 12 (in other words, the Lab image 12) is thus divided into the k segments having boundaries aligned with edges.

The corrector 21 superimposes the outlines of the k segments in the converted color image 12 on the original color image 12 (in other words, the RGB image 12) to divide the original color image 12 into k segments.

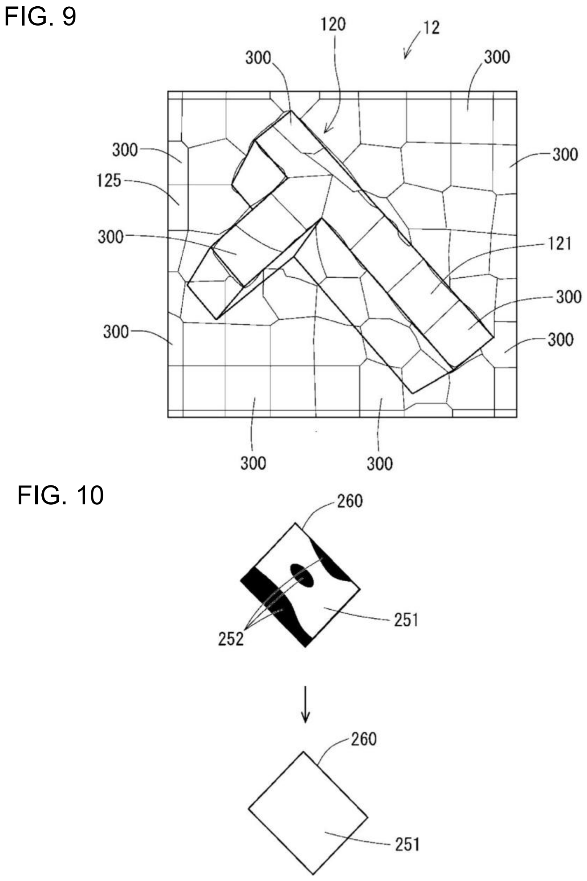

FIG. 9 is a schematic diagram of the color image 12 corresponding to the color image 12 in FIG. 3 and divided into multiple segments 300 in an example. In FIG. 9, the outlines of the segments 300 are indicated by thin lines. As illustrated in FIG. 9, the color image 12 is divided into the multiple segments 300 having boundaries aligned with edges. Dividing the color image 12 into the multiple segments 300 is, in other words, dividing each of the object region 120 and the tray region 125 included in the color image 12 into the multiple segments 300 having boundaries aligned with edges.

As shown in FIG. 5, the corrector 21 performs step s12 after performing the division process in step s11. In step s12, the corrector 21 performs a second mask process using the object mask image 200 generated in step s1. In the second mask process, the corrector 21 extracts the object region 120 divided into multiple segments (also referred to as a divided object region 120) from the color image 12 divided into multiple segments as illustrated in FIG. 9 (also referred to as a divided color image 12). In other words, in the second mask process, the object region 120 including the outlines of multiple segments is extracted from the color image 12 including the outlines of multiple segments.

In the second mask process, the corrector 21 identifies multiple pixels in the divided color image 12 that are at the same pixel positions as the respective multiple pixels included in the object region 201 in the object mask image 200. More specifically, the corrector 21 identifies multiple pixels in the divided color image 12 that are at the same pixel positions as the respective multiple pixels having a pixel value of "1" in the object mask image 200. The corrector 21 then extracts, as the divided object region 120 from the divided color image 12, a region including the multiple pixels identified in the divided color image 12.

In the processing in steps s11 and s12 described above, the corrector 21 divides, based on the color information of the captured image 12, the region of the object 15 (in other words, the object region 120) included in the captured image 12 into multiple segments having boundaries aligned with edges of the object 15. In other words, the corrector 21 divides the object region 120 into multiple segments based on the first color information of the target surface 15a and the second color information of the area adjacent to the target surface 15a represented by the captured image 12. In still other words, the corrector 21 divides the object region 120 into multiple segments based on the color tone difference or the distribution of colors of the object 15 represented by the captured image 12. In still other words, the corrector 21 divides the object region 120 into multiple segments based on the color tone difference or the distribution of colors of the target surface 15a represented by the captured image 12.

After the divided object region 120 is extracted in step s12, step s13 is performed. In step s13, the corrector 21 reshapes the target surface region 255 in the target surface mask image 250 based on the multiple segments included in the divided object region 120. In other words, the shape of the target surface region 255 is adjusted. For example, the corrector 21 superimposes the outline of each of the multiple segments included in the divided object region 120 on the target surface mask image 250, and calculates the occupancy rate of the target surface region 255 inside the outline. The corrector 21 then reshapes the target surface region 255 based on the occupancy rate calculated for each of the multiple segments. The term of segments used herein to describe step s13 refers to segments included in the divided object region 120. A segment to be described among the multiple segments included in the divided object region 120 is hereafter referred to as a focused segment.

To calculate the occupancy rate for the focused segment, the corrector 21 first superimposes the outline of the focused segment on the target surface mask image 250. The corrector 21 superimposes the outline of the focused segment on the target surface mask image 250 to cause the outline of the focused segment in the target surface mask image 250 to be at the same position as the outline of the focused segment in the color image 12. In other words, the corrector 21 superimposes the outline of the focused segment on the target surface mask image 250 to cause the multiple pixels inside the outline of the focused segment in the target surface mask image 250 to be at the same positions as the multiple pixels inside the outline of the focused segment in the color image 12.

The corrector 21 then calculates, for example, the number of all pixels included in the focused segment superimposed on the target surface mask image 250 as the total number of pixels. The corrector 21 also calculates, for example, the number of pixels of the target surface region 255 included in the focused segment superimposed on the target surface mask image 250 as the number of occupancy pixels. The corrector 21 divides, for example, the number of occupancy pixels by the total number of pixels, and defines the resultant value as the occupancy rate of the target surface region 255 inside the outline of the focused segment. The corrector 21 calculates the occupancy rate for each segment in this manner.

In step s13, the corrector 21 determines, for example, whether the region of the target surface mask image 250 inside the outline of each segment corresponds to the target surface 15a based on the occupancy rate for the segment. The corrector 21 obtains the target surface mask image 250 on which the outlines of the multiple segments are superimposed (also referred to as an outline-superimposed target surface mask image 250). When, for example, a segment has an occupancy rate greater than a threshold in the outline-superimposed target surface mask image 250, the corrector 21 determines the region inside the outline of the segment to correspond to the target surface 15a. When, for example, a segment has an occupancy rate less than the threshold in the outline-superimposed target surface mask image 250, the corrector 21 determines the region inside the outline of the segment not to correspond to the target surface 15a. When a segment has an occupancy rate equal to the threshold in the outline-superimposed target surface mask image 250, the corrector 21 may determine the region inside the outline of the segment to correspond to the target surface 15a or not to correspond to the target surface 15a. A segment with an occupancy rate greater than the threshold is hereafter referred to as a high-occupancy segment. A segment with an occupancy rate less than the threshold is referred to as a low-occupancy segment.

For each high-occupancy segment, the corrector 21 determines the entire region inside the outline of the segment to correspond to the target surface 15a in the outline-superimposed target surface mask image 250. For each low-occupancy segment, the corrector 21 determines the entire region inside the outline of the segment not to correspond to the target surface 15a in the outline-superimposed target surface mask image 250. The threshold may be, for example, 0.7 or greater, 0.8 or greater, 0.9 or greater, or any other value.

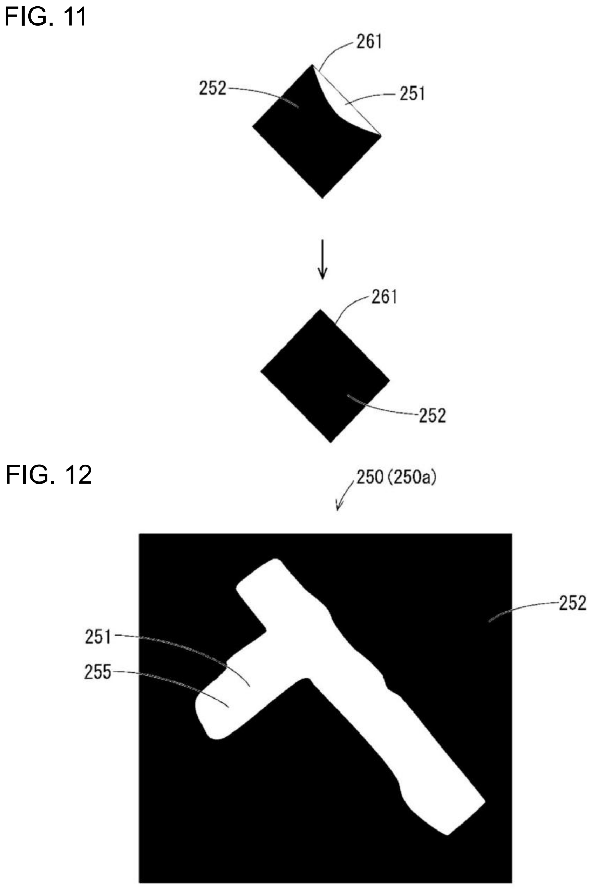

FIGs. 10 and 11 are each a schematic diagram illustrating an example operation performed by the corrector 21. FIG. 10 illustrates, in an upper portion, an example of a region 260 inside the outline of a high-occupancy segment (also referred to as a high-occupancy inside-outline region) in the outline-superimposed target surface mask image 250. FIG. 11 illustrates, in an upper portion, an example of a region 261 inside the outline of a low-occupancy segment (also referred to as a low-occupancy inside-outline region) in the outline-superimposed target surface mask image 250.

In the outline-superimposed target surface mask image 250, the corrector 21 determines the entire high-occupancy inside-outline region 260 to correspond to the target surface 15a, and resets the pixel values of all pixels included in the high-occupancy inside-outline region 260 to "1." FIG. 10 illustrates, in a lower portion, an example of the high-occupancy inside-outline region 260 with all its pixels having the pixel values reset to "1." The high-occupancy inside-outline region 260 with all its pixels having the pixel values reset to "1" forms a part of the reshaped target surface region 255.

In the outline-superimposed target surface mask image 250, the corrector 21 determines the entire low-occupancy inside-outline region 261 not to correspond to the target surface 15a, and resets the pixel values of all pixels included in the low-occupancy inside-outline region 261 to "0." FIG. 11 illustrates, in a lower portion, an example of the low-occupancy inside-outline region 261 with all its pixels having the pixel values reset to "0."

In the outline-superimposed target surface mask image 250, the corrector 21 resets the pixel values of all pixels in each high-occupancy inside-outline region 260 to "1," and resets the pixel values of all pixels in each low-occupancy inside-outline region 261 to "0." The corrector 21 thus reshapes the target surface region 255 included in the outline-superimposed target surface mask image 250 (specifically, the region having a pixel value of "1") based on the actual shape of the target surface 15a. This allows the shape of the reshaped target surface region 255 to be closer to the actual shape of the target surface 15a. The outline of each segment is deleted from the outline-superimposed target surface mask image 250 including the reshaped target surface region 255. This produces the target surface mask image 250 including the reshaped target surface region 255. The target surface mask image 250 including the reshaped target surface region 255 is hereafter referred to as a reshaped target surface mask image 250a.

FIG. 12 is a schematic diagram of an example of the reshaped target surface mask image 250a. FIG. 12 illustrates the target surface mask image 250 corresponding to the target surface mask image 250 in FIG. 7 but with the target surface region 255 reshaped in an example. The reshaped target surface region 255 illustrated in FIG. 12 has a shape closer to the actual shape of the target surface 15a (the hatched portion in FIG. 3) than the target surface region 255 illustrated in FIG. 7.

Note that SLIC is used to divide the color image 12 into multiple segments having boundaries aligned with edges in the above example. However, a segmentation algorithm other than SLIC may be used to divide the color image 12 into multiple segments. For example, a watershed or Quickshift algorithm may be used to divide the color image 12.

The color image 12 divided into the multiple segments 300 illustrated in FIG. 9 may not be generated. In this case, in step s12, an object region representing the object 15 divided into multiple segments may be extracted from the converted color image 12 divided into multiple segments (also referred to as a divided converted color image 12). For example, the corrector 21 identifies multiple pixels in the divided converted color image 12 that are at the same pixel positions as the respective multiple pixels included in the object region 201 in the object mask image 200. The corrector 21 then extracts, from the divided converted color image 12, a region including the identified multiple pixels as an object region divided into multiple segments. The object region divided into multiple segments is referred to as a second divided object region. In step s13, the target surface region 255 in the target surface mask image 250 is reshaped using the second divided object region in place of the divided object region 120.

In the process in FIG. 8 described above, the color image 12 is divided into multiple segments after color conversion. However, the color image 12 may be divided into multiple segments without color conversion. In this case, the centroid positions of the k segments are initialized for the color image 12 that is an RGB image in step s111, without step s110 being performed. Step s112 is then performed as in the above example. In step s113, the corrector 21 places the multiple pixels included in the color image 12 (in other words, the RGB image 12) in the 5D space defined by axes of the R component, the G component, the B component, the x-coordinate, and the y-coordinate. The corrector 21 provisionally determines a segment including each pixel in the 5D space as in the above example. Step s114 is then performed as in the above example. Steps s113 and s114 are then repeated to divide the color image 12 that is an RGB image into k segments having boundaries aligned with edges.

In the above example, the divided object region is extracted from the divided color image 12 based on the object mask image 200. However, the divided object region may not be extracted. In other words, the second mask process in step s12 may be eliminated. In this case, the occupancy rate may be calculated for each segment in the entire divided color image 12 in step s13. Step s13 may use the target surface mask image 250 on which the outlines of the multiple segments included in the entire divided color image 12 are superimposed (also referred to as a second outline-superimposed target surface mask image 250). In the second outline-superimposed target surface mask image 250, the region inside the outline of each segment having an occupancy rate greater than a threshold may be determined to correspond to the target surface 15a in step s13. The region inside the outline of each segment having an occupancy rate less than the threshold may be determined not to correspond to the target surface 15a in step s13.

In the above example, the object region is extracted from the color image 12 after the color image 12 is divided into multiple segments. However, the object region may be divided into multiple segments after the object region is extracted from the color image 12.

The processing device 1 may estimate each of multiple target surfaces included in the surface of the object 15. The target surface described above, or specifically, a plane in the object measurement surface having the largest size as viewed from the sensor device 10, is referred to as a first target surface. After step s7, the estimator 20 removes, from the object point cloud generated in step s3, multiple target surface points representing the first target surface estimated in step s6 to correct the object point cloud. The estimator 20 then performs steps s4 to s6 using the corrected object point cloud to estimate multiple target surface points representing a second target surface. The second target surface is a plane in the object measurement surface having the second largest size as viewed from the sensor device 10. In step s7, the estimator 20 generates a second target surface mask image 250 representing the second target surface. In step s13, the corrector 21 reshapes a second target surface region representing the second target surface included in the second target surface mask image 250 based on multiple segments as in the above example.

The processing device 1 may estimate a third target surface different from the first target surface and the second target surface. In this case, the processing device 1 further removes, from the corrected object point cloud, multiple target surface points representing the estimated second target surface to correct the object point cloud. The estimator 20 then performs steps s4 to s6 using the further corrected object point cloud to estimate multiple target surface points representing the third target surface. The third target surface is a plane in the object measurement surface having the third largest size as viewed from the sensor device 10. In step s7, the estimator 20 generates a third target surface mask image 250 representing the third target surface. In step s13, the corrector 21 reshapes a third target surface region representing the third target surface included in the third target surface mask image 250 based on multiple segments. In the same or a similar manner, the processing device 1 can estimate still another target surface.

Example Use of Estimation Result of Target Surface

The target-surface estimation result corrected by the processing device 1 has uses in various situations. For example, when the target surface 15a is sucked by a suction portion, the suction position on the target surface 15a to be sucked by the suction portion may be determined based on the target-surface estimation result corrected by the corrector 21.

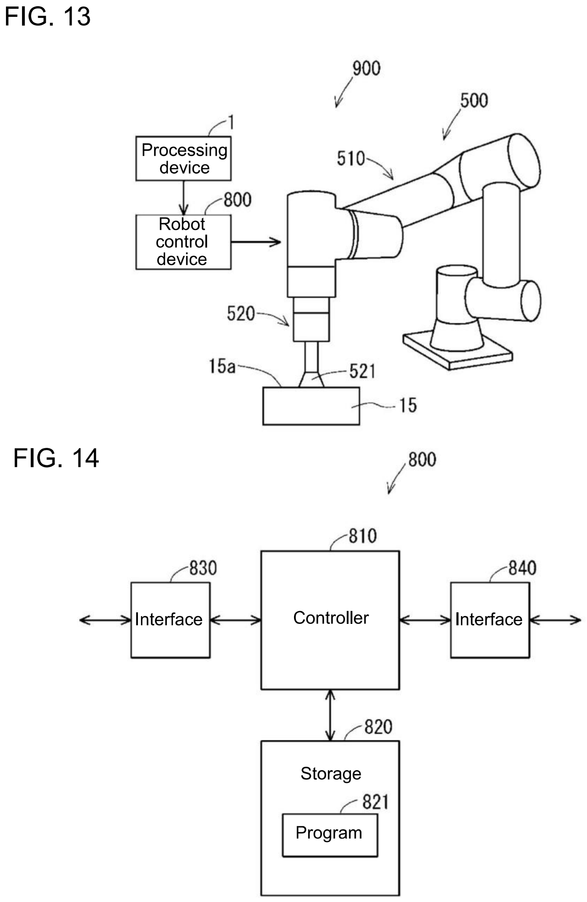

FIG. 13 is a schematic diagram of a robotic system 900 including a robot 500 with a suction portion to suck the target surface 15a of the object 15 in an example. The robotic system 900 includes, for example, the robot 500, a robot control device 800 that controls the robot 500, and the processing device 1.

The robot 500 is, for example, a robotic arm including an arm 510 and an end effector 520 connected to the arm 510. The end effector 520 includes a suction pad 521 that functions as the suction portion. The suction pad 521 can suck the target surface 15a of the object 15 to hold the object 15.

FIG. 14 is a block diagram of the robot control device 800 in an example. The robot control device 800 includes, for example, a controller 810, a storage 820, an interface 830, and an interface 840. The robot control device 800 may be, for example, a robot control circuit. The robot control device 800 may also be, for example, a computer.

The interface 830 can communicate with the interface 5 in the processing device 1. The interface 840 can communicate with the robot 500. The interface 840 may communicate with the robot 500 with wires or wirelessly.

The controller 810 can centrally manage the operation of the robot control device 800 by controlling the other components of the robot control device 800. The controller 810 has, for example, the same structure as or a similar structure to the controller 2 included in the processing device 1. The controller 810 may include, for example, a CPU as a processor.

The storage 820 has, for example, the same structure as or a similar structure to the storage 3 included in the processing device 1. The storage 820 stores, for example, a program 821 for controlling the robot control device 800. Various functions of the controller 810 are implemented by, for example, the CPU in the controller 810 executing the program 821 in the storage 820. The controller 810 can control the robot 500 through the interface 840. The controller 810 can control, for example, the arm 510 and the end effector 520. Note that the robot control device 800 may include a robot control device that controls the arm 510 and a robot control device that controls the end effector 520.

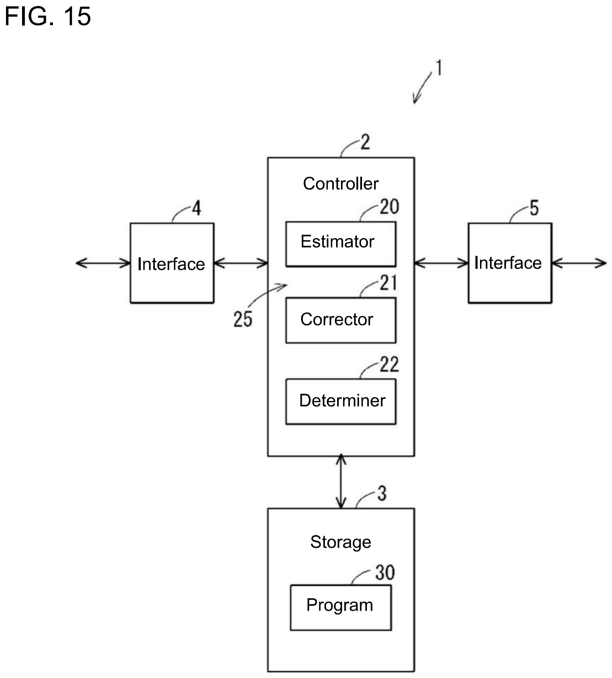

The suction position on the target surface 15a may be determined by the processing device 1 or by a device other than the processing device 1. FIG. 15 is a block diagram of the processing device 1 that determines the suction position in an example.

In the example in FIG. 15, the controller 2 includes a determiner 22 as a functional block. The determiner 22 is implemented by the CPU in the controller 2 executing the program 30 in the storage 3. The determiner 22 determines the suction position on the target surface 15a to be sucked by the suction pad 521 based on the target-surface estimation result corrected by the corrector 21. Note that the functions of the determiner 22 may be implemented entirely or partially by a hardware circuit, without using software to implement the functions.

The determiner 22 determines the suction position based on, for example, the reshaped target surface mask image 250a. The determiner 22 calculates, for example, the shortest linear distance from the edge of the target surface region 255 to each of the multiple pixels included in the target surface region 255 in the reshaped target surface mask image 250a (in other words, the reshaped target surface region 255). The edge may be the outline or the border of the target surface region 255. The determiner 22 then generates a distance conversion image by replacing the pixel value of each pixel in the target surface region 255 in the reshaped target surface mask image 250a with a value of the shortest linear distance calculated for the pixel. The distance conversion image is, for example, a grayscale image.

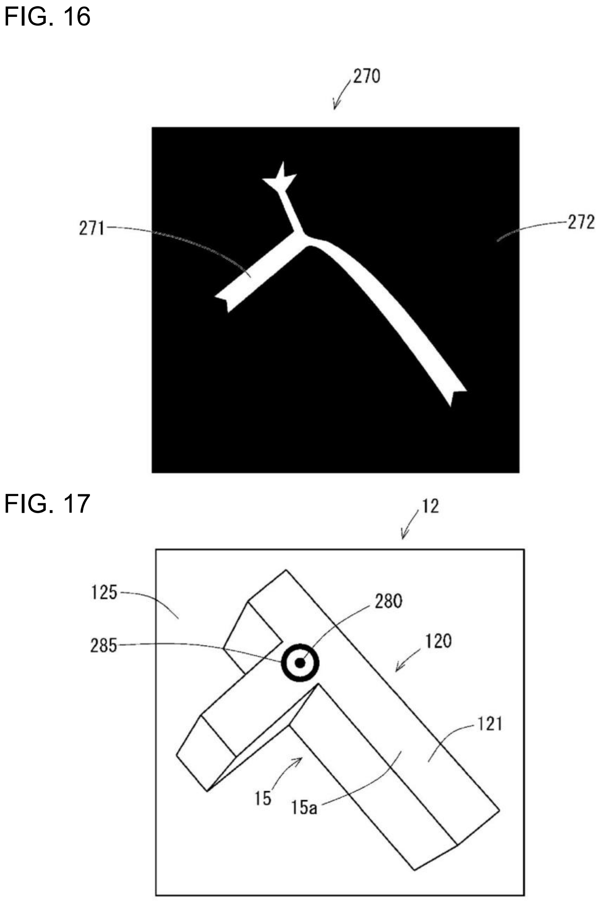

FIG. 16 is a schematic diagram of an example of a distance conversion image 270. In FIG. 16, the distance conversion image 270 includes a white portion 271 and a black portion 272 for ease of illustration, although the actual distance conversion image 270 is a grayscale image.

The white portion 271 in the distance conversion image 270 has relatively high pixel values. The black portion 272 in the distance conversion image 270 has relatively low pixel values. The white portion 271 corresponds to a portion of the target surface region 255 at a relatively large shortest linear distance from its edge in the reshaped target surface mask image 250a. The white portion 271 represents a middle portion of the target surface region 255 farther from its border (in other words, the outline). In other words, the white portion 271 represents a middle portion of the target surface farther from its border.

The determiner 22 calculates the centroid position of the target surface region 255 in the reshaped target surface mask image 250a. For example, the determiner 22 calculates the average value of the x-coordinates of the multiple pixels included in the target surface region 255 and the average value of the y-coordinates of these multiple pixels. The determiner 22 defines the calculated average value of the x-coordinates as the x-coordinate of the centroid, and defines the calculated average value of the y-coordinates as the y-coordinate of the centroid.

The determiner 22 then sets a centroid point in the distance conversion image 270 at the same position as the centroid position of the target surface region 255. The determiner 22 identifies, in the multiple pixels included in the distance conversion image 270, a pixel having a pixel value greater than or equal to a threshold and located closest to the centroid point. The determiner 22 defines the pixel position of the identified pixel as the suction pixel position. The suction pixel position indicates a position on the target surface farther from the border and closer to the centroid of the target surface. The determiner 22 sets a suction point 280 at the suction pixel position in the color image 12 including the target surface.

FIG. 17 is a schematic diagram of an example of the color image 12 including the suction point 280. The suction point 280 is located on the target surface farther from the border and closer to the centroid of the target surface in the color image 12. The determiner 22 defines the position of the suction point 280 on the target surface 15a in the color image 12 as the suction position to be sucked by the suction pad 521.

The processing device 1 provides information about the suction position determined by the determiner 22 to the robot control device 800 through the interface 5. In the robot control device 800, the interface 830 receives the suction position information, and the controller 810 controls the position of the suction pad 521 based on the suction position information. For example, the controller 810 aligns the center of the suction pad 521 with the suction position indicated by the information received at the interface 830 and causes the suction pad 521 to suck the target surface 15a.

FIG. 17 illustrates a profile 285 of the suction pad 521 to suck the target surface 15a, with the center of the suction pad 521 aligned with the suction position determined by the determiner 22. In the example in FIG. 17, the suction pad 521 is entirely in contact with the target surface 15a and can thus properly suck the target surface 15a.

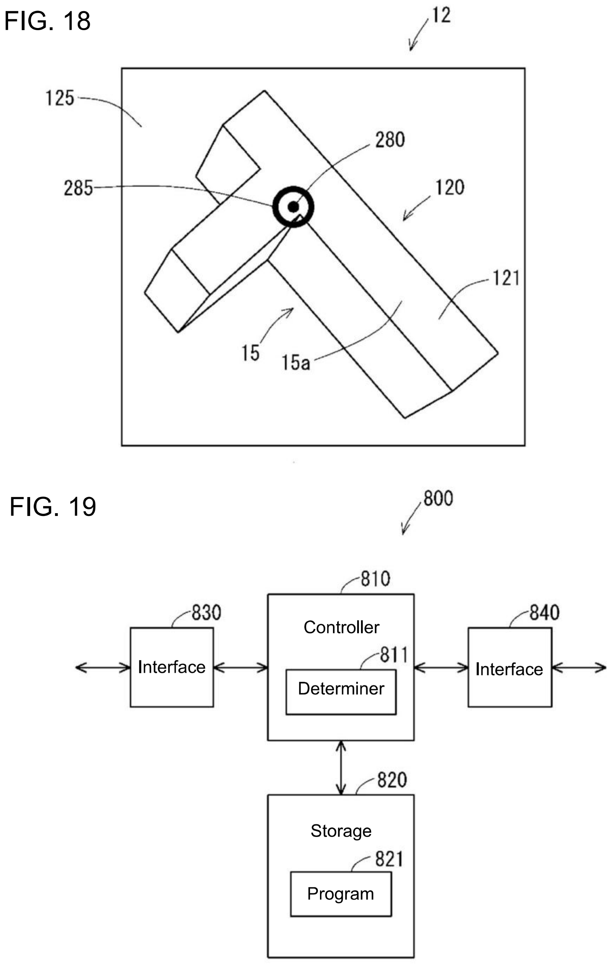

FIG. 18 is a schematic diagram of an example of the color image 12 including the suction point 280 determined by the determiner 22 in the same or a similar manner but based on the target surface mask image 250 illustrated in FIG. 7 that is not reshaped. In the example in FIG. 18, the suction point 280 is located close to the border of the target surface 15a in the color image 12. The suction pad 521 to suck the target surface 15a partially extends out of the target surface 15a and cannot suck the target surface 15a properly.

Thus, the suction position on the target surface 15a to be sucked by the suction portion is set based on the target-surface estimation result corrected by the corrector 21. This allows the suction portion to properly suck the target surface 15a.

Note that the controller 810 in the robot control device 800 may include a determiner 811 that is the same as or similar to the determiner 22 in the processing device 1 as illustrated in FIG. 19. In this case, the processing device 1 provides the target-surface estimation result corrected by the corrector 21 to the robot control device 800. In the robot control device 800, the determiner 811 determines the suction position on the target surface 15a to be sucked by the suction pad 521 based on the corrected target-surface estimation result (in other words, the detection result of the target surface 15a obtained by the detector 25), in the same manner as or in a similar manner to the determiner 22. The controller 810 controls the position of the suction pad 521 based on the suction position determined by the determiner 811. In other words, the controller 810 including the determiner 811 controls the robot 500 based on the detection result of the target surface 15a obtained by the detector 25.

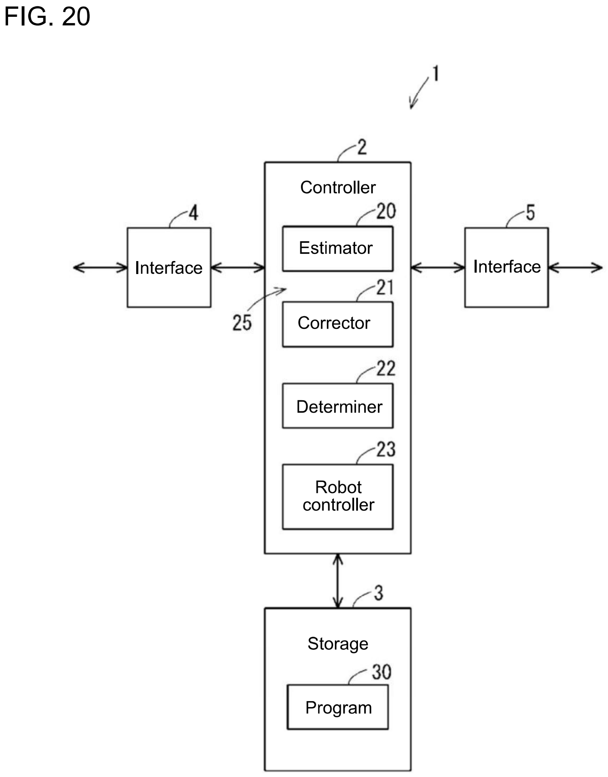

The processing device 1 may control the robot 500 based on the detection result of the target surface 15a obtained by the detector 25. FIG. 20 is a block diagram of the processing device 1 in an example in this case. In the example in FIG. 20, the controller 2 includes a robot controller 23 that controls the robot 500. The robot controller 23 can control the robot 500 through, for example, the interface 5. The robot controller 23 controls the position of the suction pad 521 based on the suction position determined by the determiner 22, in the same manner as or in a similar manner to the controller 810. The processing device 1 illustrated in FIG. 20 may be a robot control device 1 that controls the robot 500.

Note that the target surface may be a placement surface on which an object held by the robot is placed. In this case, the controller 2 or the controller 810 may use the corrected target-surface estimation result to determine the position on the placement surface at which the robot is to place the object.

Example Setting of Specific-Surface Estimation Threshold and Target-Surface-Point Estimation Threshold

For example, the specific-surface estimation threshold used in step s5 may be the same as the target-surface-point estimation threshold used in step s6. In this case, when the specific-surface estimation threshold and the target-surface-point estimation threshold are high, the specific surface in the same plane as the target surface may not be estimated properly. In contrast, when the specific-surface estimation threshold and the target-surface-point estimation threshold are low, the multiple target surface points representing the target surface included in the object point cloud may not be estimated properly, although the specific surface can be estimated properly. This will be described below.

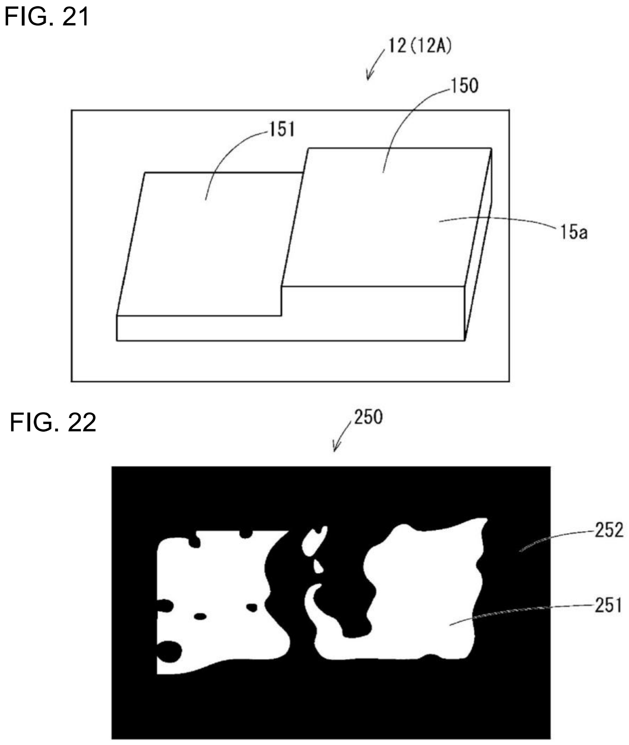

For example, the color image 12 illustrated in FIG. 21 may be used. The color image 12 illustrated in FIG. 21 (also referred to as a color image 12A) includes an object 15 with a stepped upper surface. The upper surface includes a higher surface 150 that is the target surface 15a, and a lower surface 151 that is not the target surface 15a.

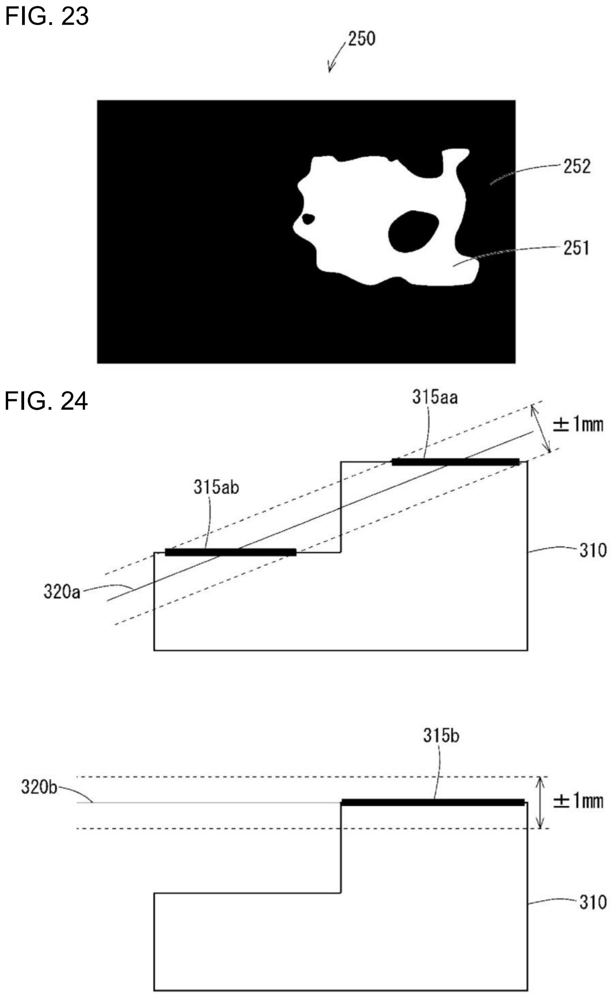

FIGs. 22 and 23 are each a schematic diagram of an example of the target surface mask image 250 generated by the estimator 20 based on the color image 12A and the depth image corresponding to the color image 12A. FIG. 22 illustrates the target surface mask image 250 with the specific-surface estimation threshold and the target-surface-point estimation threshold each set to a relatively high value (e.g., 1.0 mm). FIG. 23 illustrates the target surface mask image 250 with the specific-surface estimation threshold and the target-surface-point estimation threshold each set to a relatively low value (e.g., 0.5 mm).

The lower surface 151 that is not the target surface 15a appears in the target surface mask image 250 illustrated in FIG. 22 in addition to the higher surface 150 as the target surface 15a. This results from the improper estimation of the specific surface. In contrast, the lower surface 151 that is not the target surface 15a does not appear in the target surface mask image 250 illustrated in FIG. 23. However, the higher surface 150 as the target surface 15a appearing in the target surface mask image 250 has a shape largely different from the actual shape. This results from the improper estimation of the multiple object points representing the higher surface 150 as the target surface 15a.

FIG. 24 is a schematic diagram illustrating an example estimation process of the specific surface with the specific-surface estimation threshold and the target-surface-point estimation threshold each set to 1.0 mm. FIG. 24 roughly illustrates an example of an area 310 including the object point cloud generated in step s3 in the camera coordinate system (also referred to as a point cloud area 310). The point cloud area 310 includes a stepped upper surface corresponding to the stepped upper surface of the object 15. The upper surface of the point cloud area 310 includes a higher surface corresponding to the higher surface 150 as the target surface 15a, and a lower surface corresponding to the lower surface 151 that is not the target surface 15a.

FIG. 24 also illustrates examples of candidate surfaces 320a and 320b defined in the camera coordinate system in step s4. The candidate surface 320a extends obliquely through the higher and lower surfaces included in the upper surface of the point cloud area 310. The candidate surface 320b includes the higher surface included in the upper surface of the point cloud area 310.

FIG. 24 illustrates an example of an area 315aa, roughly indicated by a thick line, that is an area including object points located at a distance less than or equal to the specific-surface estimation threshold (specifically, 1.0 mm) from the candidate surface 320a, among the multiple object points (in other words, measurement points) on the higher surface 150 included in the upper surface of the object 15. FIG. 24 illustrates an example of an area 315ab, roughly indicated by a thick line, that is an area including object points located at a distance less than or equal to the specific-surface estimation threshold from the candidate surface 320a, among the multiple object points on the lower surface 151 included in the upper surface of the object 15. FIG. 24 illustrates an example of an area 315b, roughly indicated by a thick line, that is an area including object points located at a distance less than or equal to the specific-surface estimation threshold from the candidate surface 320b, among the multiple object points on the higher surface 150 included in the upper surface of the object 15.

The candidate surface 320b is to be estimated as the specific surface that is in the same plane as the target surface. In the example in FIG. 24, however, the number of object points located at a distance less than or equal to the specific-surface estimation threshold (specifically, 1.0 mm) from the candidate surface 320a is larger than the number of object points located at a distance less than or equal to the specific-surface estimation threshold from the candidate surface 320b. This causes the candidate surface 320a, rather than the candidate surface 320b, to be estimated as the specific surface that is in the same plane as the target surface. In this case, the lower surface 151 that is not the target surface 15a appears in the target surface mask image 250 in addition to the higher surface 150 as the target surface 15a, as illustrated in FIG. 22.

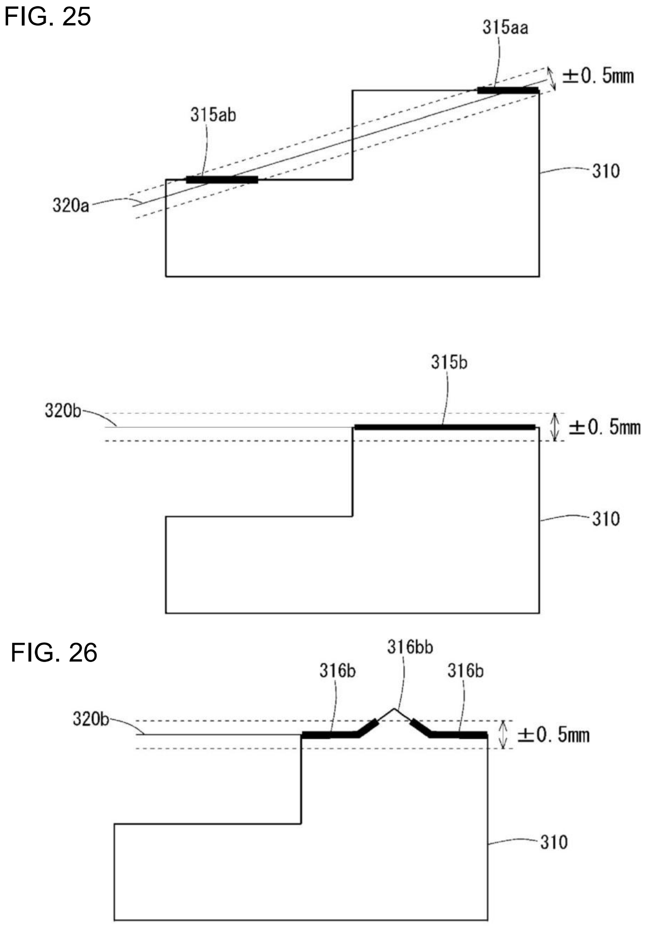

FIG. 25 is a schematic diagram illustrating an example estimation process of the specific surface with the specific-surface estimation threshold and the target-surface-point estimation threshold each set to 0.5 mm. FIG. 25 illustrates the same elements as in FIG. 24. In the example in FIG. 25, the number of object points located at a distance less than or equal to the specific-surface estimation threshold (specifically, 0.5 mm) from the candidate surface 320b is larger than the number of object points located at a distance less than or equal to the specific-surface estimation threshold from the candidate surface 320a. The candidate surface 320b is thus estimated to be the specific surface that is in the same plane as the target surface. In this case, the higher surface 150 as the target surface 15a appears in the target surface mask image 250 without the appearance of the lower surface 151 that is not the target surface 15a, as illustrated in FIG. 23.

The multiple object points representing the target surface 15a in the object point cloud may include a relatively large number of object points located at a distance greater than 0.5 mm from the candidate surface 320b. In this case, an error in the distance measured by the sensor device 10 may cause improper estimation of the multiple object points representing the target surface 15a. This may cause the shape of the higher surface 150 as the target surface 15a appearing in the target surface mask image 250 to be largely different from the actual shape as illustrated in FIG. 23.

FIG. 26 is a schematic diagram illustrating the multiple object points representing the target surface 15a including a relatively large number of object points located at a distance greater than 0.5 mm from the candidate surface 320b in an example. FIG. 26 illustrates an example of an area 316b, roughly indicated by a thick line, that is an area including object points located at a distance less than or equal to 0.5 mm from the candidate surface 320b, among the multiple object points on the higher surface 150 included in the upper surface of the object 15 (in other words, the multiple object points representing the target surface 15a). FIG. 26 illustrates an area 316bb, roughly indicated by a line thinner than the line for the area 316b, that is an area including object points located at a distance greater than 0.5 mm from the candidate surface 320b, among the multiple object points on the higher surface 150 included in the upper surface of the object 15 (in other words, the multiple object points representing the target surface 15a).

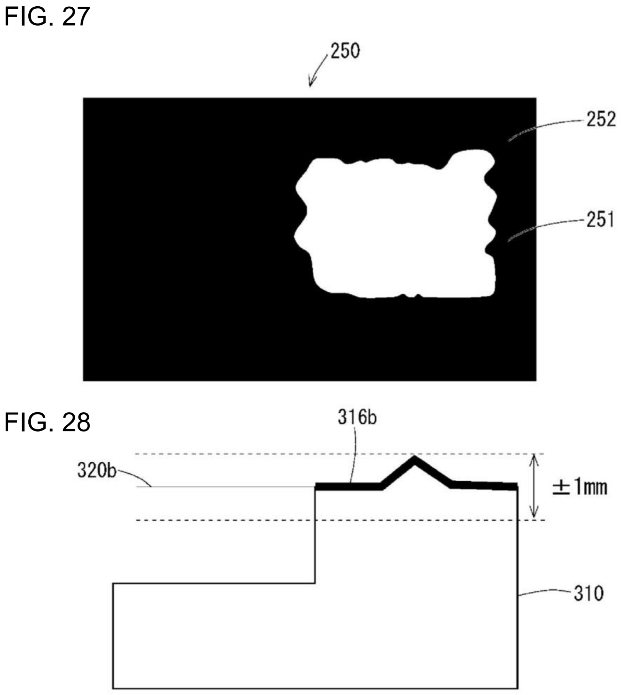

FIG. 27 is a schematic diagram of an example of the target surface mask image 250 with the specific-surface estimation threshold being 0.5 mm and the target-surface-point estimation threshold being 1.0 mm. The lower surface 151 that is not the target surface 15a does not appear in the target surface mask image 250 illustrated in FIG. 27. Further, the higher surface 150 as the target surface 15a appearing in the target surface mask image 250 has a shape close to the actual shape. This results from the proper estimation of the specific surface, and also results from substantially no object points located at a distance greater than 1.0 mm from the candidate surface 320b that are included in the multiple object points representing the target surface 15a as illustrated in FIG. 28.

The specific-surface estimation threshold and the target-surface-point estimation threshold that are set separately as described above allow the target surface to be estimated more accurately. A higher target-surface-point estimation threshold improves the robustness of the estimation process of the target surface against errors in the distance measured by the sensor device 10. In other words, a higher target-surface-point estimation threshold improves the robustness of the estimation process of the target surface against errors (in other words, noise) included in the depth image 11.

Specific example methods for setting the specific-surface estimation threshold and the target-surface-point estimation threshold will now be described. Methods for setting the specific-surface estimation threshold and the target-surface-point estimation threshold are based on different setting criteria. A specific example method for setting the target-surface-point estimation threshold will be described first.

As described above, the target-surface-point estimation threshold being too high may cause an object point (in other words, a measurement point) that is not in the same plane as the target surface to be estimated as a target surface point. In contrast, the target-surface-point estimation threshold being too low may reduce the robustness of the estimation process of the target surface against errors included in the depth image 11.

Thus, the target-surface-point estimation threshold is set based on, for example, a maximum error in the distance represented by the depth image 11. This reduces the likelihood that an object point that is not in the same plane as the target surface is estimated as a target surface point, and can also maintain the robustness of the estimation process of the target surface against errors included in the depth image 11. In other words, the target surface can be estimated more accurately.

The target-surface-point estimation threshold may be set using, for example, the depth image 11 generated by the sensor device 10 in an actual environment in which the sensor device 10 is used actually. This depth image 11 is referred to as an actual-environment depth image 11. The maximum error in the distance represented by the actual-environment depth image 11 is obtained by experiment or simulation. For example, errors relative to the actual distances are obtained by experiment or simulation for measurement distances indicated by the respective pixel values of the multiple pixels included in the actual-environment depth image 11. The greatest of the errors obtained for the multiple measurement distances is defined as the maximum error in the distance represented by the actual-environment depth image 11. The target-surface-point estimation threshold may be set to the same value as the maximum error in the distance represented by the actual-environment depth image 11, or may be set to the maximum error multiplied by a predetermined adjustment coefficient.

A specific example method for setting the specific-surface estimation threshold will now be described. As described above, a lower specific-surface estimation threshold allows more accurate estimation of the specific surface. To estimate the specific surface properly using RANSAC as described above, for example, the object point cloud generated from the depth image 11 is to include at least three object points located at a distance less than or equal to the specific-surface estimation threshold from the target surface. When the specific-surface estimation threshold is too low, the object point cloud may include less than three object points located at a distance less than or equal to the specific-surface estimation threshold from the target surface, possibly causing improper estimation of the specific surface.

The specific-surface estimation threshold is thus set based on, for example, a distribution of errors in the distance represented by the depth image 11. This allows more accurate estimation of the specific surface.

To set the specific-surface estimation threshold, for example, a distribution of errors in multiple measurement distances indicated by the respective pixel values of the multiple pixels included in the actual-environment depth image 11 is calculated as a distribution of errors in the distance represented by the depth image 11 (also referred to as a distance error distribution). More specifically, the relationship between each error value and the number of pixels corresponding to the measurement distance having the error value is calculated based on errors in the multiple measurement distances corresponding to the respective multiple pixels included in the actual-environment depth image 11. In other words, for each error value of the measurement distance in the actual-environment depth image 11, the number of pixels corresponding to the measurement distance with the error value is calculated.

The probability that an error in the measurement distance corresponding to a pixel included in the depth image 11 is less than or equal to the specific-surface estimation threshold is then calculated. The specific-surface estimation threshold is denoted by x. The probability that an error in the measurement distance corresponding to a pixel included in the depth image 11 is less than or equal to x is denoted by r(x). The probability r(x) is expressed by Formula 1 below.

$$r(x) = m/s \qquad\qquad (1)$$

In Formula 1, S is the number of multiple pixels included in the depth image 11 (in other words, the total number of pixels in the depth image 11). In Formula 1, m is the number of pixels corresponding to the measurement distance having an error less than or equal to x in the calculated distance error distribution.

A probability P1(x) is then calculated. The probability P1(x) is the probability that the number of pixels corresponding to the measurement distance having an error less than or equal to x is 2 or less among the multiple pixels corresponding to the target surface 15a included in the depth image 11. The multiple pixels corresponding to the target surface 15a included in the depth image 11 are, in other words, the multiple pixels corresponding to the respective multiple measurement points on the target surface 15a (in other words, the multiple measurement points representing the target surface 15a) included in the depth image 11. The probability P1(x) is the sum of the probability that the number of pixels corresponding to the measurement distance having an error less than or equal to x is 0, the number of pixels corresponding to the measurement distance having an error less than or equal to x is 1, and the number of pixels corresponding to the measurement distance having an error less than or equal to x is 2, among the multiple pixels corresponding to the target surface 15a included in the depth image 11. The probability P1(x) is expressed by Formula 2 below using a combination C.

$$P1(x) = \sum_{k=0}^{2} \left( r(x)^{k} \times (1 - r(x))^{N-k} \times {}_{N}C_{k} \right) \qquad\qquad (2)$$

In Formula 2, N is the number of multiple pixels corresponding to the target surface 15a included in the depth image 11.

The probability P1(x) is then used to calculate a probability P2(x) that the number of pixels corresponding to the measurement distance having an error less than or equal to x is 3 or more among the multiple pixels corresponding to the target surface 15a included in the depth image 11. The probability P2(x) is expressed by Formula 3 below. A higher specific-surface estimation threshold x produces a higher probability P2(x).

$$P2(x) = 1 - P1(x) \qquad (3)$$

For example, P2 (0.1 mm) is expressed by Formula 4 below when N = 2500 and r (0.1 mm) = 0.1.

$$P2\ (0.1\ \text{mm}) = 1 - 1.5 \times 10^{-110} \qquad (4)$$

The specific-surface estimation threshold x is set to a lowest possible value that causes the probability P2(x) to be sufficiently high. When the probability P2(x) higher than or equal to 0.999 is sufficient, for example, the specific-surface estimation threshold x is set to a value that causes the probability P2(x) to be 0.999.

In this manner, the specific-surface estimation threshold and the target-surface-point estimation threshold are set using different setting criteria. This allows, for example, the target-surface-point estimation threshold to be set higher than the specific-surface estimation threshold x.

Note that the specific-surface estimation threshold may be set to the same value as or a higher value than the target-surface-point estimation threshold due to, for example, an error in the distance measured by the sensor device 10 when the specific-surface estimation threshold and the target-surface-point estimation threshold are set using different setting criteria.

The processing device and the program have been described in detail, but the above structures are illustrative in all respects, and the present disclosure is not limited to the above structures. The above embodiments may be combined in any manner unless any contradiction arises. Many examples other than those illustrated above may also be implemented without departing from the scope of the present disclosure.

For example, although the processing device 1 is used for the robotic arm in the above example, the processing device 1 may be used for an automated guided vehicle (AGV) or an autonomous mobile robot (AMR) or for a humanoid robot. The processing device 1 may also be used for, for example, a nursing robot or a teleoperated robot. Although the object 15 is an industrial product in the above example, the object 15 is not limited to this example. The object 15 may be, for example, a food product such as a vegetable or bread, furniture such as a drawer, or a thing for everyday life such as a toothbrush or a cup.

The present disclosure provides the structures described below.

In one embodiment, (1) a processing device includes a detector that detects a partial surface included in a surface of an object based on surface information and color information. The surface information is surface information about the surface of the object. The surface information is obtained based on distance information indicating a distance to the object. The color information is color information of a color image or a grayscale image including the object and an area adjacent to the object.

(2) In the processing device according to (1), the color information includes first color information of the partial surface and second color information of an area adjacent to the partial surface.

(3) In the processing device according to (2), the first color information includes a color tone difference of the partial surface.

(4) In the processing device according to any one of (1) to (3), the color information includes a color tone difference of the object.

(5) In the processing device according to any one of (1) to (4), the detector includes an estimator that obtains the surface information based on the distance information and estimates the partial surface based on the obtained surface information, and a corrector that corrects, based on the color information, an estimation result obtained by the estimator, to provide the corrected estimation result as a detection result of the partial surface.

(6) In the processing device according to (5), the corrector divides, based on the color information, a region of the object included in the color image or the grayscale image into a plurality of segments having boundaries aligned with edges of the object, and corrects the estimation result based on the plurality of segments.

(7) In the processing device according to (6), the estimator generates a mask image of the partial surface as the estimation result. The corrector superimposes an outline of each of the plurality of segments on the mask image, calculates an occupancy rate of a region of the partial surface inside the outline of each of the plurality of segments, and reshapes the region of the partial surface based on the occupancy rate for each of the plurality of segments.

(8) In the processing device according to (7), the corrector determines whether a region inside the outline of each of the plurality of segments in the mask image corresponds to the partial surface based on the occupancy rate for the segment.

(9) In the processing device according to any one of (1) to (8), the estimator generates, based on a depth image representing the distance information, a point cloud representing the surface of the object as the surface information, defines a plurality of candidate surfaces based on the point cloud, estimates, of the plurality of candidate surfaces, a candidate surface in a same plane as the target surface based on a result of comparison between a first threshold and a distance from each of the plurality of candidate surfaces to a point included in the point cloud, and estimates a plurality of points representing the partial surface included in the point cloud based on a result of comparison between a second threshold and a distance from the candidate surface estimated to be in the same plane as the target surface to a point included in the point cloud.

(10) In the processing device according to (9), the second threshold is higher than or equal to the first threshold.

(11) In the processing device according to (9) or (10), the first threshold and the second threshold are based on different setting criteria.

(12) In the processing device according to (11), the first threshold is based on a distribution of errors in a distance represented by the depth image.

(13) In the processing device according to (11) or (12), the second threshold is based on a maximum error in a distance represented by the depth image.

(14) The processing device according to any one of (1) to (13) further includes a determiner that determines, based on a detection result of the partial surface obtained by the detector, a suction position on the partial surface to be sucked by a suction portion.

(15) The processing device according to (14) further includes a controller that controls a position of the suction portion based on the suction position determined by the determiner.

(16) A robot control device includes a controller that controls a robot based on a detection result of the partial surface obtained by the detector included in the processing device according to any one of (1) to (13).

(17) A robotic system includes the robot control device according to (16) and a robot controllable by the controller included in the robot control device.

(18) A program causes a computer to function as the processing device according to any one of (1) to (15).

(19) A program causes a computer to function as the robot control device according to (16).

REFERENCE SIGNS

1 processing device
11 depth image
12 (12A) captured image, color image, grayscale image
15 object
15a target surface (partial surface)
20 estimator
21 corrector
22, 811 determiner
25 detector
30, 821 program
50 measurement space
120 object region
250 target surface mask image
251 target surface region
300 segment
320a, 320b candidate surface
521 suction portion
800 robot control device
810 controller
900 robotic system

## Claims

1. A processing device, comprising:

   a detector configured to detect a partial surface included in a surface of an object based on surface information and color information, the surface information being surface information about the surface of the object, the surface information being obtained based on distance information indicating a distance to the object, the color information being color information of a color image or a grayscale image including the object and an area adjacent to the object.

2.  The processing device according to claim 1, wherein
    the color information includes first color information of the partial surface and second color information of an area adjacent to the partial surface.

3.  The processing device according to claim 2, wherein
    the first color information includes a color tone difference within the partial surface.

4.  The processing device according to any one of claims 1 to 3, wherein
    the color information includes a color tone difference of the object.

5.  The processing device according to any one of claims 1 to 4, wherein
    the detector includes

    an estimator configured to obtain the surface information based on the distance information and estimate the partial surface based on the obtained surface information, and
    a corrector configured to correct, based on the color information, an estimation result obtained by the estimator, to provide the corrected estimation result as a detection result of the partial surface.

6.  The processing device according to claim 5, wherein
    the corrector is configured to

    divide, based on the color information, a region of the object included in the color image or the grayscale image into a plurality of segments having boundaries aligned with edges of the object, and
    correct the estimation result based on the plurality of segments.

7.  The processing device according to claim 6, wherein

    the estimator is configured to generate a mask image of the partial surface as the estimation result, and
    the corrector is configured to

        superimpose an outline of each of the plurality of segments on the mask image, and calculate an occupancy rate of a region of the partial surface inside the outline of each of the plurality of segments, and
        reshape the region of the partial surface based on the occupancy rate for each of the plurality of segments.

8.  The processing device according to claim 7, wherein
    the corrector is configured to determine whether a region inside the outline of each of the plurality of segments in the mask image corresponds to the partial surface based on the occupancy rate for the segment.

9.  The processing device according to any one of claims 1 to 8, wherein
    the estimator is configured to

    generate, based on a depth image representing the distance information, a point cloud representing the surface of the object as the surface information,
    define a plurality of candidate surfaces based on the point cloud,
    estimate, of the plurality of candidate surfaces, a candidate surface in a same plane as the target surface based on a result of comparison between a first threshold and a distance from each of the plurality of candidate surfaces to a point included in the point cloud, and
    estimate a plurality of points representing the partial surface included in the point cloud based on a result of comparison between a second threshold and a distance from the candidate surface estimated to be in the same plane as the target surface to a point included in the point cloud.

10. The processing device according to claim 9, wherein
    the second threshold is higher than or equal to the first threshold.

11. The processing device according to claim 9 or claim 10, wherein
    the first threshold and the second threshold are based on different setting criteria.

**12.** The processing device according to claim 11, wherein
the first threshold is based on a distribution of errors in a distance represented by the depth image.

**13.** The processing device according to claim 11 or claim 12, wherein
the second threshold is based on a maximum error in a distance represented by the depth image.

**14.** The processing device according to any one of claims 1 to 13, further comprising:
a determiner configured to determine, based on a detection result of the partial surface obtained by the detector, a suction position on the partial surface to be sucked by a suction portion.

**15.** The processing device according to claim 14, further comprising:
a controller configured to control a position of the suction portion based on the suction position determined by the determiner.

**16.** A robot control device, comprising:
a controller configured to control a robot based on a detection result of the partial surface obtained by the detector included in the processing device according to any one of claims 1 to 13.

**17.** A robotic system, comprising:

the robot control device according to claim 16; and
a robot controllable by the controller included in the robot control device.

**18.** A program for causing a computer to function as the processing device according to any one of claims 1 to 15.

**19.** A program for causing a computer to function as the robot control device according to claim 16.

## FIG. 1

## FIG. 2

FIG. 3

FIG. 4

# FIG. 5

Estimator

s1 Generate object mask image based on captured image

s2 First mask process

s3 Generate point cloud

s4 Define multiple candidate surfaces

s5 Estimate candidate surface in same plane as target surface among multiple candidate surfaces

s6 Estimate multiple points representing target surface included in point cloud

s7 Generate target surface mask image

Corrector

s11 Divide captured image

s12 Second mask process

s13 Reshape target surface region in target surface mask image

FIG. 6

FIG. 7

FIG. 8

```
                                              ⌐ s110
              ┌─────────────────────────────┐
              │        Color conversion      │
              └─────────────────────────────┘
                             │
                             ▼                ⌐ s111
              ┌─────────────────────────────┐
              │  Initialize centroid positions of │
              │           segments            │
              └─────────────────────────────┘
                             │
                             ▼                ⌐ s112
              ┌─────────────────────────────┐
              │    Adjust centroid positions  │
              └─────────────────────────────┘
                             │
                             ▼                ⌐ s113
              ┌─────────────────────────────┐
              │  Provisionally determine segment │
              │       including each pixel     │
              └─────────────────────────────┘
                             │
                             ▼                ⌐ s114
              ┌─────────────────────────────┐
              │   Calculate centroid positions │
              └─────────────────────────────┘
```

FIG. 9

FIG. 10

FIG. 11

261

252 — 251

261

252

250 (250a)

FIG. 12

252

251 —
255 —

## FIG. 13

## FIG. 14

FIG. 15

FIG. 16

FIG. 17

FIG. 18

FIG. 19

FIG. 20

FIG. 21

FIG. 22

## FIG. 23

## FIG. 24

FIG. 25

315aa

±0.5mm

315ab

310

320a

320b

315b

±0.5mm

310

FIG. 26

316bb

316b

316b

320b

±0.5mm

310

FIG. 27

FIG. 28

## INTERNATIONAL SEARCH REPORT

| International application No. |
| --- |
| **PCT/JP2024/023154** |

| A. | CLASSIFICATION OF SUBJECT MATTER |
| --- | --- |

*G06T 7/11*(2017.01)i; *B25J 13/08*(2006.01)i
FI:  G06T7/11; B25J13/08 A

According to International Patent Classification (IPC) or to both national classification and IPC

| B. | FIELDS SEARCHED |
| --- | --- |

Minimum documentation searched (classification system followed by classification symbols)

G06T7/11; B25J13/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2017-87317 A (TOYOTA JIDOSHA KABUSHIKI KAISHA) 25 May 2017 (2017-05-25) paragraphs [0001]-[0065], fig. 1-6 | 1-5, 9-11, 14-19 |
| A | entire text, all drawings | 6-9, 12-13 |
| Y | JP 2007-41656 A (SONY CORPORATION) 15 February 2007 (2007-02-15) paragraphs [0001]-[0110], fig. 1-27 | 1-5, 9-11, 14-19 |
| A | entire text, all drawings | 6-8, 12-13 |
| Y | WO 2005/088244 A1 (SONY CORPORATION) 22 September 2005 (2005-09-22) paragraph [0002] | 9-11, 14-15 |
| Y | WO 2021/177239 A1 (FANUC CORPORATION) 10 September 2021 (2021-09-10) paragraphs [0036]-[0042], fig. 4 | 14-15 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 August 2024** | **10 September 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/023154**

| Patent document cited in search report | | | Publication date (day/month/year) | Patent family member(s) | Publication date (day/month/year) |
|---|---|---|---|---|---|
| JP | 2017-87317 | A | 25 May 2017 | (Family: none) | |
| JP | 2007-41656 | A | 15 February 2007 | (Family: none) | |
| WO | 2005/088244 | A1 | 22 September 2005 | US 2007/0257910 A1<br>paragraphs [0001]-[0029] | |
| WO | 2021/177239 | A1 | 10 September 2021 | US 2023/0125022 A1<br>paragraphs [0049]-[0055],<br>fig.4<br>CN 115210049 A | |

Form PCT/ISA/210 (patent family annex) (July 2022)

**EP 4 738 249 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014085940 A